# FASCICULE DE BREVET EUROPEEN

(11) **EP 1 945 504 B1**
(45) Date de publication et mention de la délivrance du brevet: **11.08.2010**
(21) Numéro de dépôt: 06819363.0
(22) Date de dépôt: 09.11.2006
(51) Int. Cl.: B64D 11/00

(54) **Ensemble pour le guidage en coulissement longitudinal d'un sous-ensemble**
ANORDNUNG ZUM FÜHREN DER LÄNGSGLEITBEWEGUNG EINER BAUUNTERGRUPPE
ASSEMBLY FOR GUIDING THE LONGITUDINAL SLIDING MOVEMENT OF A SUB-ASSEMBLY

(30) Priorité: 10.11.2005 FR 0553425
(43) Date de publication de la demande: 23.07.2008
(73) Titulaire: Adder, 94420 Le Plessis Trevise (FR)
(72) Inventeur: MICHEL, Dominique, F-94210 La Varenne Saint Hilaire (FR)
(74) Mandataire: Kohn, Philippe
(86) Numéro de dépôt international: PCT/EP2006/068286
(87) Numéro de publication internationale: WO 2007/054534

(56) Documents cités:
- EP-A1- 1 342 662
- WO-A-03/004304
- DE-C1- 4 119 623
- FR-A1- 2 728 860
- FR-A1- 2 729 171
- US-A- 4 509 888
- US-A- 5 797 575
- US-A- 5 816 534

## Description

### DOMAINE TECHNIQUE DE L'INVENTION

La présente invention concerne un ensemble pour le guidage en coulissement longitudinal d'un sous-ensemble.

L'invention trouve à s'appliquer dans le domaine des transports et des cabines de véhicules, et concerne notamment un ensemble pour le guidage d'une traverse supérieure de support d'un élément transversal de division de l'espace intérieur d'une cabine d'avion.

Un dispositif séparateur mobile, tel que celui qui est décrit par exemple dans le document FR-A-2.791.031 permet, comme il porte une cloison ou un rideau, de séparer deux classes dans l'habitacle d'un avion de ligne.

### ART ANTERIEUR

On connaît par exemple les documents US-A-5.816.534 ou US-A-5.086.540 qui décrivent et représentent un agencement pour diviser l'espace intérieur d'une cabine d'avion.

L'élément transversal de division comporte une traverse transversale supérieure de support qui est adjacente à la paroi interne du plafond de la cabine et dont chaque extrémité libre est guidée longitudinalement au moyen d'une structure associée de guidage qui est par exemple située dans un espace ou zone qui est intermédiaire entre la partie supérieure des coffres d'une rangée associée de coffres et une portion voisine des panneaux d'habillage de plafond.

Une coulisse de guidage comporte une rainure dont la paroi interne délimite des chemins longitudinaux de guidage et/ou de roulement pour des éléments complémentaires portés par un chariot de guidage et/ou de roulement agencé à une extrémité libre associée de la traverse.

Selon le document US-A-5.086.540, il est proposé un ensemble pour le guidage en coulissement longitudinal d'un sous-ensemble d'un élément transversal de division de l'espace intérieur d'une cabine d'avion, du type comportant une coulisse de guidage qui comporte une rainure dont la paroi interne délimite des chemins longitudinaux de guidage et/ou de roulement pour des éléments complémentaires portés par un chariot de guidage et/ou de roulement relié audit sous-ensemble, ensemble dans lequel le corps de la coulisse comporte une rainure longitudinale avant, ouverte selon une direction transversale, le chariot de guidage est reçu dans la rainure de la coulisse associée, le chariot de guidage comporte au moins un système de blocage en position longitudinale du chariot qui coopère avec la coulisse, et le chariot de guidage comporte des éléments de roulement, agencés par paires à ses extrémités longitudinales opposées, qui sont susceptibles de rouler sur des chemins longitudinaux de roulement formés dans la rainure du corps de la coulisse.

La conception d'un tel agencement, et notamment de la traverse ou poutre supérieure de support, de ses moyens de guidage et de leurs moyens de mise en place et de fixation doit permettre une manipulation très aisée de l'élément transversal de division pour, en utilisation, en modifier la position longitudinale dans la cabine ; puis en assurer un blocage fiable en position.

### RESUME DE L'INVENTION

L'invention propose un ensemble du type défini précédemment, notamment pour le guidage d'une traverse supérieure de support d'un élément transversal de division de l'espace intérieur d'une cabine d'avion, caractérisé :
- en ce que les chemins de roulement sont des arcs de cylindre longitudinaux, et les éléments de roulement comportent chacun une paire de galets de roulement croisés ;
- et en ce que le système de blocage comporte au moins un patin de blocage qui est agencé longitudinalement entre les éléments de roulement agencés par paires aux extrémités longitudinales opposées du chariot, et qui sous l'action d'un mécanisme d'actionnement, est monté mobile entre une position effacée et une position de blocage dans laquelle le patin coopère par friction avec une surface de blocage appartenant au corps de la coulisse.

Selon d'autres caractéristiques de l'invention :
- - le patin de blocage comporte une semelle de blocage qui est susceptible de coopérer avec une piste plane longitudinale de blocage formée dans la rainure ;
- le patin de blocage comporte une semelle de blocage qui est susceptible de coopérer avec une piste longitudinale de blocage formée à l'extérieur de la rainure.

### BREVE DESCRIPTION DES FIGURES

D'autres caractéristiques et avantages de l'invention apparaîtront à la lecture de la description détaillée qui va suivre pour la compréhension de laquelle on se reportera aux dessins annexés dans lesquels :
- la figure 1 est une vue schématique en section par un plan vertical et transversal d'une cabine d'avion à couloir central;
- la figure 2 est un schéma illustrant la conception générale et l'implantation de l'agencement du couloir central qui représente notamment la traverse transversale supérieure et ses deux structures longitudinales de guidages opposées ;
- la figure 3 est une vue de détail à plus grande échelle illustrant partiellement une structure de guidage avec un panneau d'habillage de plafond et un coffre supérieur à bagages ;
- la figure 4 est une vue en perspective éclatée des principaux composants illustrés à la figure 3 ;
- la figure 5 est une vue de détail à plus grande échelle et en perspective, avec arrachement partiel, qui illustre une extrémité longitudinale d'une coulisse de guidage avec ses moyens d'alignement avec une autre coulisse ;
- la figure 6 est une vue schématique en perspective selon un autre angle de vue illustrant la coopération des moyens d'alignement de deux coulisses consécutives ;
- la figure 7 est une vue en perspective et à grande échelle de l'un des deux chariots de guidage selon l'invention agencé à l'une des deux extrémités transversales opposées de la traverse supérieure ;
- les figures 8 et 9 sont des vues de détail illustrant le système commandé de blocage selon l'invention du chariot longitudinal, en positions de blocage et de libération du chariot de guidage, respectivement ;
- la figure 10 est une vue en perspective à plus grande échelle illustrant un chariot de guidage et une coulisse complémentaire, ainsi que des moyens de liaison électrique entre le chariot et la coulisse de guidage ;
- la figure 11 est une vue longitudinale en bout illustrant la coopération du chariot avec la coulisse et les moyens complémentaires de liaison électrique ; et
- la figure 12 et 13 sont des vues en perspective et en coupe par un plan vertical transversal illustrant le raccordement électrique des pistes conductrices d'une coulisse de guidage.
- les figures 14 et 15 sont deux vues en section par un plan vertical transversal qui illustrent une première variante de conception de la coulisse et qui illustrent en détails la coopération des deux galets d'une paire de galets associés avec leurs chemins de roulement ;
- la figure 16 est une vue partielle en perspective qui illustre un autre exemple dé réalisation d'un chariot de guidage

selon l'invention avec ses moyens de blocage selon l'invention et ses moyens intégrés de contact avec les pistes électriques ;
- les figures 17 et 18 sont des vues schématiques de dessus qui illustrent deux positions des patins de blocage et du bloc de blocage et porte-contacts illustrés à la figure 16 ;
- les figures 19 et 20 sont deux vues en section à plus grande échelle des figures 17 et 18 ; et
- la figure 21 est une vue en perspective éclatée des principaux composants d'un chariot de guidage selon un mode de réalisation préféré de l'invention et de son bloc porte-contacts.

### DESCRIPTION DETAILLEE DES FIGURES

Dans la description qui va suivre, des composants identiques, similaires ou analogues seront désignés par les mêmes chiffres de référence.

On adoptera les termes longitudinal, transversal, vertical, à titre non limitatif, notamment en référence au trièdre L, V, T indiqué sur les figures, les orientations verticale et horizontale étant celles correspondant à l'orientation actuelle dans une cabine d'avion, la direction longitudinale correspondant à la longueur de la cabine.

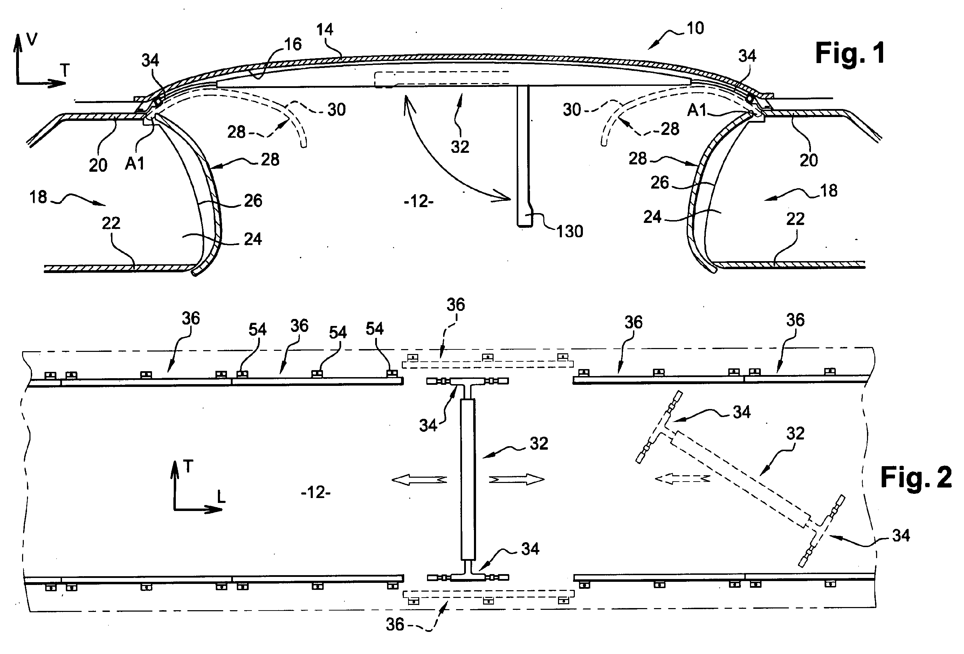

On a représenté schématiquement à la figure 1, la partie supérieure de la cabine 10 d'un avion de ligne à couloir central 12.

L'espace intérieur, ou habitacle, est notamment délimité par des panneaux d'habillage de plafond 14 qui s'étendent transversalement sur toute la largeur de la partie supérieure de la cabine. Les panneaux 14 sont délimités intérieurement par leurs parois internes 16 qui constituent la paroi interne du plafond de la cabine.

De part et d'autre, c'est-à-dire transversalement à gauche et à droite, en considérant la figure 1, la partie supérieure de la cabine comporte ici des coffres supérieurs à bagages 18.

De manière connue, les coffres 18 de chaque rangée gauche et droite sont adjacents longitudinalement et ils sont disposés sur toute la longueur de la cabine, au-dessus des sièges, afin de disposer de la plus grande capacité possible de rangement pour les passagers.

Chaque coffre 18 comporte une structure ou armature, non représentée en détail, et il est notamment délimité par une paroi supérieure globalement horizontale 20, une paroi inférieure globalement horizontale 22 et deux parois verticales transversales 24 qui déterminent la longueur du coffre.

Chaque coffre à bagages 18 comporte une face verticale ouverte orientée transversalement vers l'intérieur de la cabine pour permettre son chargement.

Chaque face ouverte avant 26 est fermée par une porte 28 qui, de manière connue, est montée basculante autour d'un axe longitudinal supérieur A1 entre une position basse de fermeture du coffre 18, illustrée à la figure 1, et une position haute, illustrée en pointillés à la figure 1, donnant accès à la face ouverte 26, et donc à l'espace de chargement du coffre à bagages 18.

Il est particulièrement important que l'angle d'ouverture de chaque porte 28 soit maximal, et donc que la face externe 30 de chaque porte 28, dont le profil est convexe bombé, puisse être la plus adjacente possible à la portion en vis-à-vis de paroi interne 16 de l'élément de panneau d'habillage de plafond 14 en vis-à-vis.

On a aussi représenté à la figure 1, la traverse transversale supérieure 32 constituant l'élément de support d'un sous-ensemble, tel qu'un élément transversal de division longitudinale de la cabine, non représenté sur les figures, qui est par exemple un rideau suspendu de manière connue sous la traverse 32.

La traverse 32 est un élément globalement en forme de poutre d'orientation transversale et horizontale qui s'étend transversalement sur toute la largeur de la partie supérieure de la cabine. A poutre est sensiblement adjacente à la paroi interne 16 des panneaux 14.

De manière connue, chaque extrémité libre transversale 34 de la traverse de support 32 est guidée longitudinalement en coulissement dans la cabine de manière à pouvoir occuper une infinité de positions longitudinales de division de l'habitacle intérieur 12, notamment pour diviser celui-ci en zone de classes différentes.

Chaque extrémité longitudinale est ici conformée en un chariot de guidage longitudinal 34.

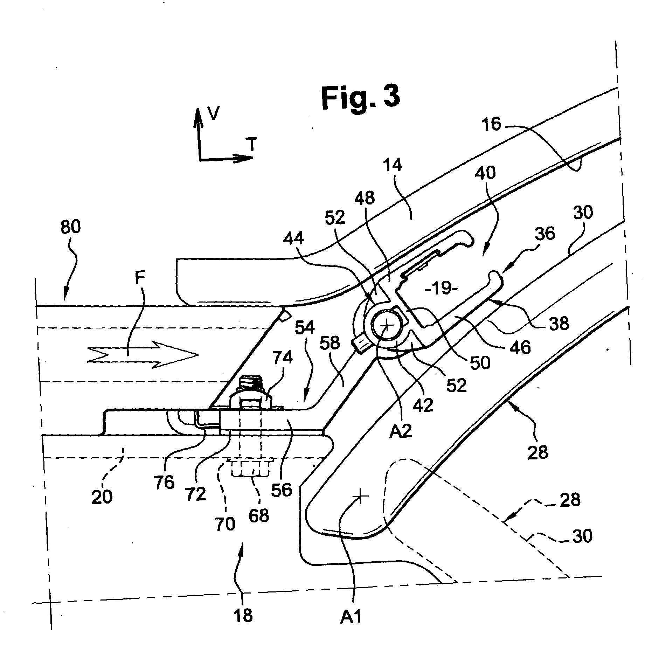

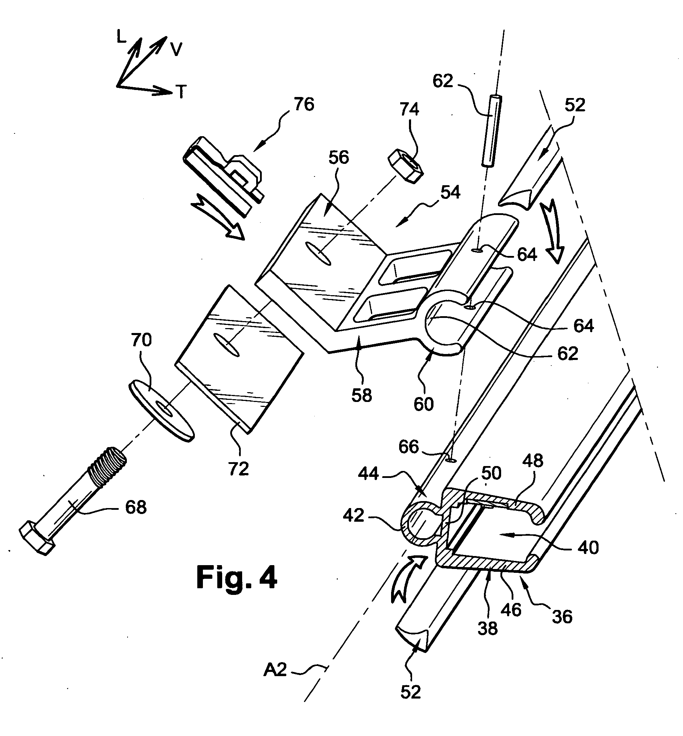

On décrira maintenant en détails, notamment en référence aux figures 3 et 4, la conception des structures de guidage des chariots 34.

Dans la mesure où la conception de ces structures de guidage est modulaire et parfaitement identique en tous points et de chaque côté de la cabine, on décrira ici seulement la structure de guidage de partie gauche de la figure 1.

Comme on peut le voir schématiquement à la figure 2, chaque structure de guidage est constituée par une série de coulisses 36 dont chacune est, comme cela sera expliqué plus avant, un tronçon d'un profilé spécifique.

La conception modulaire, en plusieurs tronçons consécutifs 36 constituant une coulisse longitudinale continue, permet notamment un aménagement aisé d'une cabine avec ce type de structure de guidage.

La conception modulaire permet une mise en place facile de la traverse supérieure, par dépose temporaire de deux coulisses 36 opposées comme cela est illustré en pointillés à la partie centrale de la figure 2.

La conception des structures de guidage décrite ici permet la dépose des panneaux de plafond sans dépose ou montage préalable des structures de guidage de la traverse 32.

Comme on peut le voir notamment à la figure 4, chaque coulisse 36 est un tronçon de profilé comportant essentiellement une partie avant 38 délimitant une rainure longitudinale 40 ouverte transversalement vers l'avant, selon la direction "T", c'est-à-dire vers l'intérieur de la cabine, et une partie arrière 42 constituant une nervure longitudinale 44 orientée vers l'arrière et qui est donc transversalement opposée à la rainure avant 40.

La partie avant 38 présente ici, en section transversale, sensiblement une forme de "C", et la partie avant 38 comporte à cet effet une paroi inférieure 46 et une paroi supérieure 48, globalement parallèles entre elles, qui sont reliées entre elles, à l'arrière, par une paroi longitudinale verticale 50 à partir de laquelle la partie arrière 42 s'étend à l'opposé vers l'arrière.

La partie 42 présente ici, en section transversale, un profil circulaire délimitant ainsi extérieurement une nervure 44 en forme de tronçon de cylindre à section circulaire convexe d'orientation longitudinale selon un axe A2.

Dans les zones de sa partie 42 ne coopérant pas avec les pattes de fixation, et pour conférer à la coulisse 36 un profil aérodynamique, la forme extérieure de sa partie arrière est ici complétée par des tronçons d'appendices aérodynamiques longitudinaux 52 qui, comme on peut le voir notamment à la figure 3, confèrent un profil aérodynamique optimisé de la partie arrière de la coulisse 36.

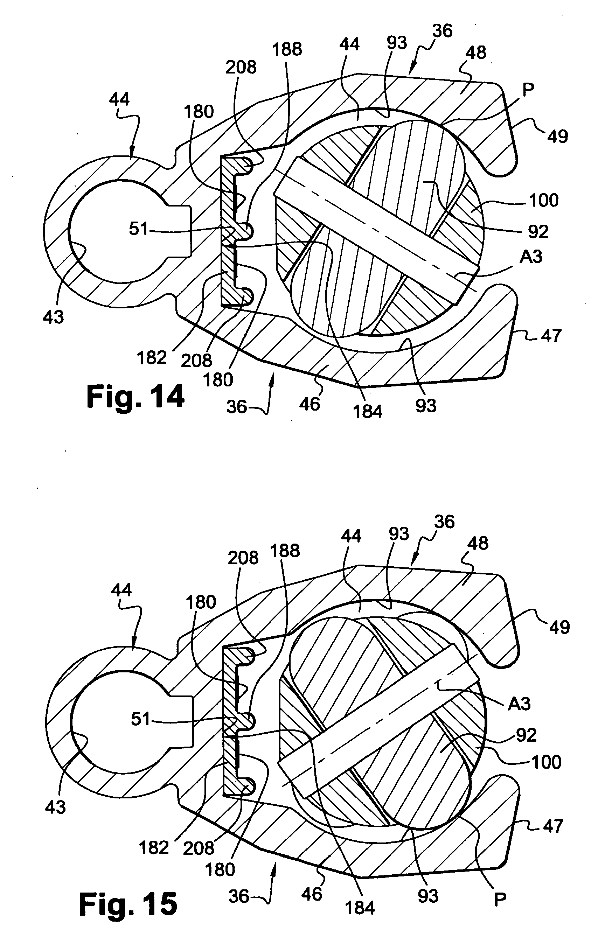

Il est aussi possible de conférer un tel profil optimisé au profilé lui-même comme illustré par exemple à la figure 14, sans recourir à des appendices aérodynamiques supplémentaires.

Comme on peut le voir à la figure 3, le corps de chaque coulisse 36 est dimensionné de manière optimisée pour être reçu entre les portions en vis-à-vis de face interne 16 d'un panneau 14 et de face externe 30 d'une porte 28 de coffre 18 lorsque cette dernière est en position haute ouverte.

L'agencement et le positionnement de la coulisse 36, dans cette zone 19 de place disponible réduite, sont assurés par des pattes 54 de fixation.

Chaque coulisse 36, dont la longueur totale correspond sensiblement à la longueur d'un coffre à bagages 18, est plus particulièrement fixée sur la partie supérieure du coffre 18, ici au moyens de trois pattes de fixation 54 réparties longitudinalement (voir figure 2).

Chaque patte de fixation 54 est réalisée par moulage et elle comporte une branche horizontale 56 en forme de plaque qui s'étend transversalement et qui est ici fixée sur la partie supérieure du coffre 18, c'est-à-dire par exemple sur la cloison supérieure 20.

Chaque plaque, ou socle 56, d'une patte de fixation 54 se prolonge transversalement vers l'intérieur par une branche de fixation 58 qui s'étend globalement de manière inclinée, par exemple sensiblement à 45°, comme on peut le voir à la figure 3, dans l'espace délimité par les faces 16 et 30.

Chaque branche inclinée 58 de fixation se termine par une glissière longitudinale 60 qui présente un profil intérieur 62 en forme de tronçon de cylindre concave à section circulaire qui est complémentaire du profil cylindrique convexe de la nervure 44 de manière que celle-ci puisse être reçue en coulissement dans la glissière 60.

Les pattes de fixation 54 sont mises en place, par coulissement longitudinal selon l'axe A2, sur la nervure 44 du corps d'une coulisse 36.

Les moyens d'immobilisation longitudinale et angulaire de la glissière 60 par rapport à la nervure 44, et donc de la coulisse 36 par rapport aux pattes 54 qui la portent, sont constitués par une goupille radiale 62 qui est reçue dans des trous complémentaires 64 de la glissière 60 et 66 de la nervure 44.

Cette conception permet une grande modularité en fonction des applications à partir de composants standardisés que constituent les coulisses 36 et les pattes 54, les trous 64 et 66 pouvant être percés en nombres, en positions, et en orientations différents en fonction des applications.

La conception en "V" très ouvert de chaque patte de fixation 54 permet, comme on peut le voir à la figure 3, l'agencement optimisé de la coulisse 36 dans la zone entre les panneaux 14 et les portes 28 des coffres 18.

La fixation des socles 56 sur les cloisons supérieures 20 et/ou sur des éléments de structures prévus à cet effet des coffres 18, se fait par exemple grâce à un ensemble de composants comprenant une vis 68, une rondelle 70, une cale d'appui 72, un écrou 74 et une cage 76 de positionnement de l'écrou, de manière notamment à permettre un réglage en position selon les trois directions de chaque tronçon de coulisse 36.

Le montage et la fixation s'effectuent de préférence dans des perçages existants des coffres à bagages.

Comme on peut le voir à la figure 3, la conception des structures de guidage et des pattes de fixation est telle que l'ensemble de ces composants perturbe le moins possible le flux aérodynamique F sortant de buses d'aération et de climatisation 80 existantes dans les cabines et qui débouchent transversalement vers l'intérieur entre les parties en vis-à-vis de panneaux 14 d'habillage de plafond et des faces supérieures des coffres à bagages.

Le profilage aérodynamique optimisé des coulisses 36, par exemple par les appendices 52, favorise l'écoulement du flux F.

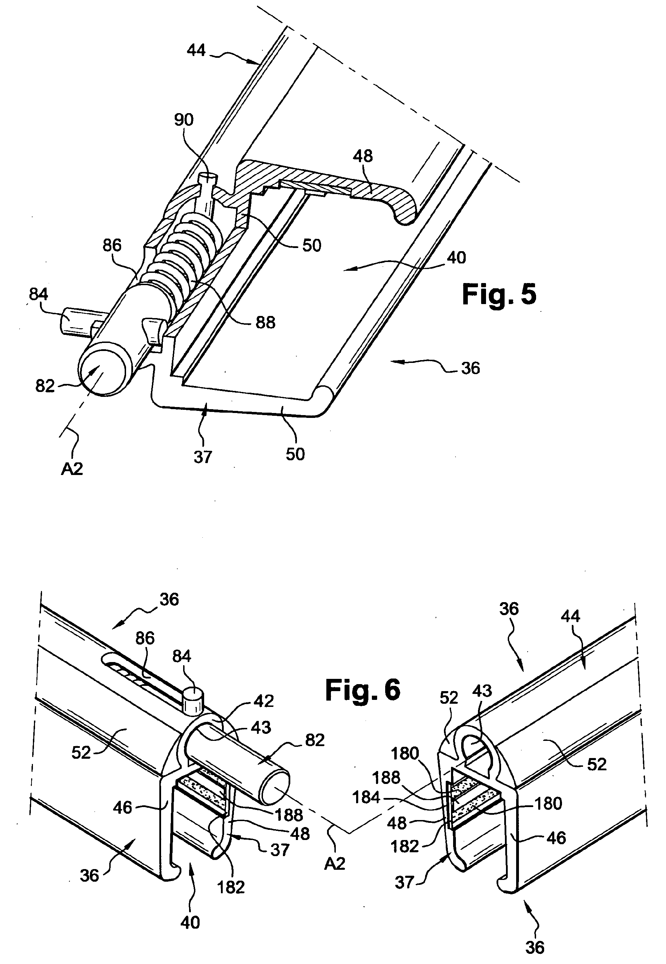

Pour assurer l'alignement et la continuité de deux coulisses 36 consécutives longitudinalement, il peut être prévu, comme illustré aux figures 5 et 6 en détails, des moyens d'alignement qui sont ici essentiellement constitués par un doigt longitudinal d'alignement 82.

Chaque doigt 82 est monté coulissant longitudinalement dans le tronçon d'extrémité longitudinale cylindrique tubulaire creux 43 de la partie arrière 42.

Chaque doigt 82 est ainsi un tronçon de cylindre plein qui est apte à être reçu dans le logement cylindrique tubulaire ceux 43 de la partie arrière 42 hors duquel il fait saillie axialement au-delà de la face transversale d'extrémité 37 du corps de la coulisse 36.

Chaque doigt 82 est monté coulissant et il est retenu à l'intérieur par un pion radial de retenue 84 qui fait saillie radialement à travers une lumière longitudinale 86.

Le doigt 82 est sollicité élastiquement en permanence par un ressort à boudin 88 qui est comprimé et qui prend appui sur un pion radial d'appui 90 (voir figure 5).

Comme on le comprend aisément à la figure 6, l'assemblage et la continuité de deux coulisses consécutives 36 est effectué aisément grâce au tronçon en saillie du doigt 82 qui est reçu dans la partie complémentaire en vis-à-vis 43 de l'extrémité transversale de l'autre coulisse 36, chaque coulisse 36 n'étant ainsi équipée d'un doigt 82 qu'à l'une de ses deux extrémités longitudinales opposées.

Le pion 84 qui fait saillie radialement vers l'extérieur permet aussi de commander la rétraction le doigt 82 pour faciliter le démontage d'une coulisse 36 et sa désolidarisation des deux coulisses 36 qui lui sont immédiatement adjacentes.

Selon une variante de réalisation non représentée, le système à ressort peut être remplacé par une vis radiale de serrage en position longitudinale du doigt 82 et/ou par une clavette reçue et montée serrée dans des embrèvements correspondants des coulisses à assembler.

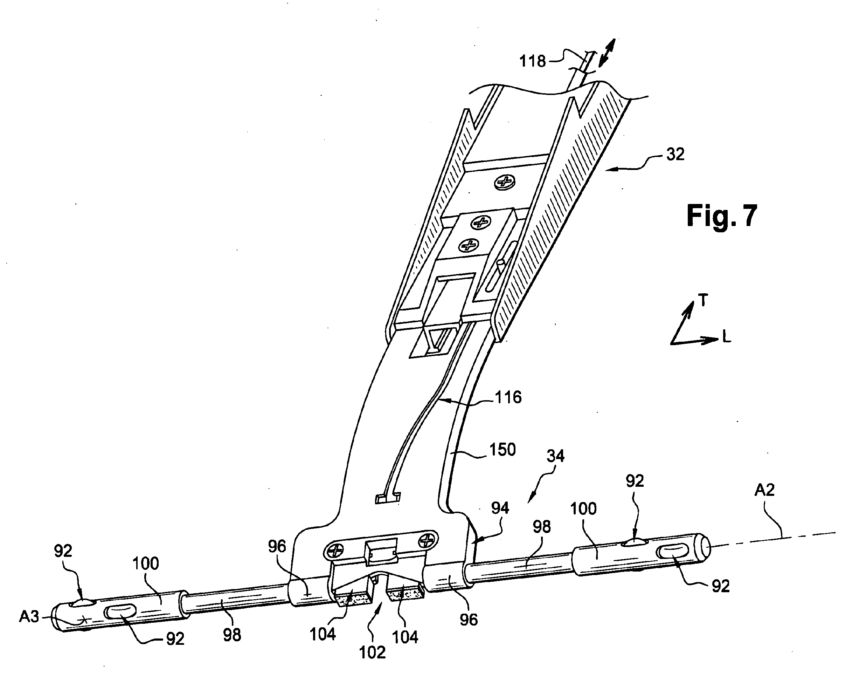

Selon un aspect de l'invention, on a représenté aux figures 7 à 9, un chariot de guidage 34 équipant ici une des extrémités transversales longitudinales opposées de la traverse supérieure 32.

Chaque chariot 34 est prévu pour être reçu en coulissement longitudinal dans la rainure 40 de la coulisse 36 associée.

A cet effet, le guidage est ici assuré par des galets 92 de roulement qui sont agencés, ici par paires, aux extrémités longitudinales opposées du chariot 34.

A cet effet, le chariot 34 comporte un corps 94 en forme de plaque en U. Chacune des extrémités libres des deux branches transversales parallèles 96 du corps 94 en U, qui est reçue dans la rainure 40, porte une tige longitudinale 98 cylindrique circulaire, les tiges 98 étant alignées longitudinalement selon l'axe A2 de coulissement.

A son extrémité libre opposée à la branche 96, chaque tige 98 porte un manchon 100 de guidage en coulissement dont chacun porte à rotation deux galets de roulements 92.

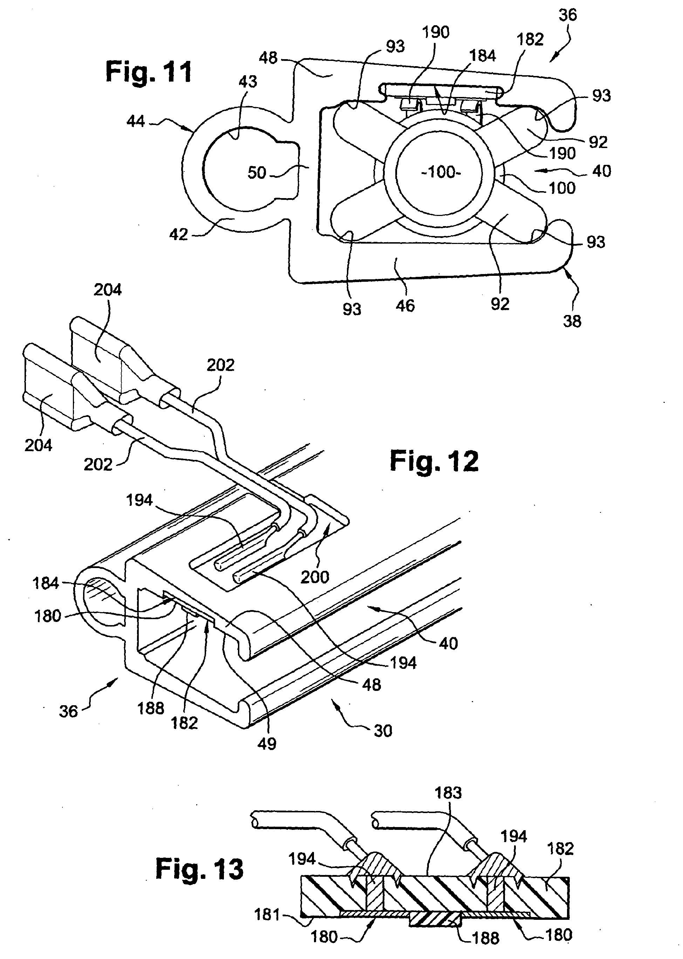

Les axes A3 de rotation deux galets associés d'une paire de galets 92 portés par un manchon 100 sont d'orientation globalement radiale par rapport à la tige 98 et au manchon 100 et sont de préférence orientés sensiblement à 70 degrés l'un par rapport à l'autre (voir figure 11). L'angle est optimisé pour réduire les dimensions et pour éviter les phénomènes de coincement.

Cette conception permet d'avoir une grande distance entre les paires opposées de galets 92 et donc un très bon coulissement et une grande stabilité du chariot 34.

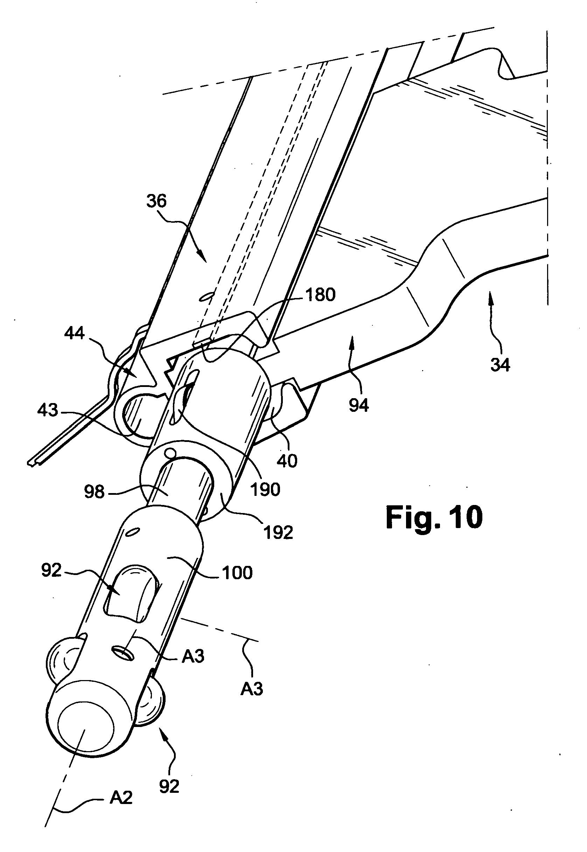

Comme on peut le voir notamment à la figure 10 et à la figure 12, les galets 92 sont reçus dans la rainure 40 de la coulisse 36, et les bandes de roulement de galets 92 coopèrent avec des chemins de roulement 93, de profil concave complémentaire, qui sont agencés en vis-à-vis dans les parois 46 et 48 de la rainure 40 de la coulisse 36.

La conception n'est bien entendu pas limitée à des galets de roulement et peut faire appel à toute autre forme d'éléments de roulement tels que des billes, le profil intérieur de la rainure 40 étant modifié de manière correspondante pour comporter des chemins de roulement complémentaires.

Selon un autre aspect de l'invention, afin d'assurer l'immobilisation en position longitudinale de la traverse supérieure 32, chaque chariot 34 de guidage, en coulissement par roulement des galets 92, comporte ici des moyens 102 de blocage du chariot 34 par rapport à la coulisse 36 dans laquelle il est reçu.

Les moyens de blocage 102 sont ici un système de blocage à deux patins de blocage 104.

Chaque patin de blocage 104 comporte une semelle plane de blocage 106 qui est agencée pour coopérer avec une piste de blocage appartenant à la coulisse 36.

La piste de blocage est ici formée dans la rainure 40, et elle est constituée par la face interne plane et longitudinale 51 appartenant à la paroi longitudinale de fond 50 de la coulisse 36.

Chaque patin de blocage 104 est monté articulé sur un levier de blocage 108 en "L", autour d'un axe 110 orthogonal à la direction longitudinale de coulissement.

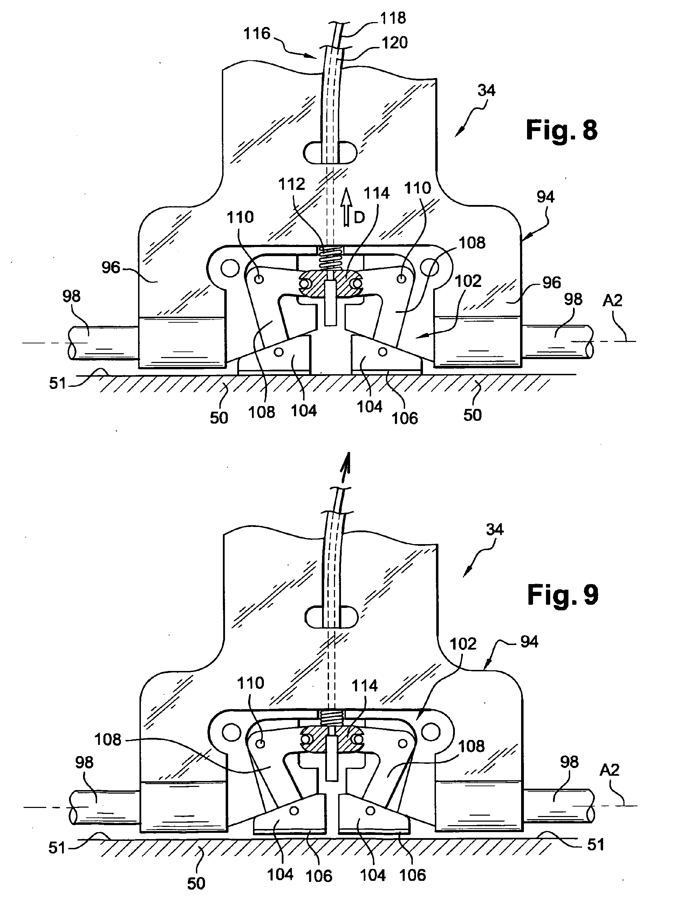

Le pivotement de chaque levier 108 autour de son axe 110 permet de plaquer, par arc-boutement, la semelle 106 contre la piste de blocage 51, ou au contraire de l'en écarter pour libérer le chariot 34, comme on peut le voir aux figures 8 et 9.

Les leviers 108, et donc les patins 104, sont sollicités élastiquement en permanence vers la position de blocage illustrée à la figure 8 par un ressort hélicoïdal de compression 112 qui agit sur un palonnier 114 d'entraînement simultané des deux leviers 108 en pivotement autour de leurs axes 110.

Pour libérer le chariot 34, c'est-à-dire pour amener les leviers 108 et les patins 104 dans leur position arrière illustrée à la figure 9, il faut exercer une traction sur le palonnier 114, selon la direction D indiquée à la figure 8 et à l'encontre de l'effort exercé par le ressort 112, pour amener le palonnier 114 et les patins 104 dans la position arrière illustrée à la figure 9.

A cet effet, le chariot 34 est équipé d'un câble de commande de déblocage 116 qui est un câble du type tirer-pousser ou "câble Bowden" comportant une âme 118 reliée au palonnier 114 et une gaine 120 portée par le corps 94 du chariot 34.

Bien entendu, la forme des semelles 106 et le profil de la piste ou surface de blocage 51 peuvent varier tout en restant complémentaires.

Il est prévu des moyens (non représentés en détails) d'actionnement simultané des câbles 116 qui comportent notamment une poignée pivotante 130, montée articulée sur la partie centrale de la traverse 32, qui agit sur les câbles 116 par l'intermédiaire d'un mécanisme.

Les moyens d'actionnement sont constitués par un mécanisme qui est agencé dans la partie centrale du corps de la traverse 32, et qui agit simultanément sur les âmes 118 des deux câbles 116 qui s'étendent transversalement de manière opposée.

La poignée 130 est maintenue dans sa position haute - correspondant au blocage des patins 104 et dans laquelle elle s'étend globalement horizontalement à l'intérieur du corps de la traverse du corps 32 - par un loquet de verrouillage qui est susceptible d'être manipulé par le personnel de cabine, depuis la face inférieure de la traverse 32.

Pour provoquer le déblocage, ou libération, de la traverse 32, le personnel agit sur la poignée 130 en la faisant pivoter vers le bas pour atteindre la position dans laquelle la poignée est quasiment verticale à l'intérieur de la cabine et les chariots 34 sont alors libérés.

En faisant "remonter" la poignée 130 vers le haut, l'utilisateur provoque à nouveau un déplacement des âmes 118 des câbles 116 aboutissant au blocage longitudinal des deux chariots 34, le mouvement de la poignée 130 se terminant par son verrouillage à nouveau en position haute de blocage.

Pour permettre de s'adapter aux variations dimensionnelles, notamment en vol, de la structure de la cabine, au moins l'une des deux extrémités longitudinales de la traverse est conçue en deux parties pour permettre une "variation" de la longueur transversale totale de la traverse.

Chaque tronçon de coulisse 36 comporte ici deux pistes électriques conductrices longitudinales parallèles avec lesquelles peuvent coopérer des éléments de contact électrique qui sont portés par le chariot de guidage 34 et qui sont reliés électriquement à au moins un composant récepteur appartenant à l'élément transversal de division.

Il peut s'agir d'un luminaire porté par la traverse et/ou d'écrans d'affichage d'informations.

Les pistes conductrices servent ainsi à l'alimentation en courant et/ou à la transmission de signaux électriques de données.

Dans l'exemple illustré aux figures, et notamment aux figures 6, 13 et 14, les deux pistes conductrices d'orientation longitudinale 180 sont deux pistes planes parallèles. Chaque piste conductrice 180 est formée sur une face 181 appartenant à une bande longitudinale de circuit souple 182 qui est rapportée dans une gorge, ou lamage, complémentaire 184 formée ici dans la face interne 49 de la paroi longitudinale supérieure 48 de la partie avant du profilé 36 délimitant la rainure 40.

Les deux pistes conductrices 180 sont isolées électriquement l'une de l'autre par une cloison longitudinale isolante 188 ici réalisée sous la forme d'un ruban isolant.

Le ruban constituant la cloison isolante 188 peut aussi être réalisé sous la forme d'un cordon de matière isolante, par exemple à base de silicone, qui est déposé après la réalisation et des pistes conductrices sur la bande 182.

Lorsqu'il y a deux pistes 180 isolées par une cloison isolante 188, le chariot de guidage 34 comporte bien entendu deux éléments de contact électrique qui sont ici deux frotteurs distincts 190 représentés schématiquement à la figure 12.

Lors des déplacements longitudinaux dans les deux sens du chariot 34 par rapport à la coulisse 36, le ou les frotteurs sont 190 en permanence en contact avec la ou les pistes conductrices associées 180.

On a représenté à la figure 10, une variante simplifiée dans laquelle il n'y a qu'une seule piste conductrice 180 et le frotteur est une lame de contact déformable élastiquement 190 portée par un manchon 192 du chariot de guidage 34.

Le ruban constitue une cloison longitudinale isolante 188 qui permet de séparer les pistes et notamment d'associer une piste à l'alimentation électrique et une autre piste à la transmission de signaux.

Chaque piste conductrice 180 peut par exemple être formée de manière avantageuse sur la face interne 181 d'une bande longitudinale 182, par exemple ici de circuit souple, qui est rapportée à l'intérieur de la gorge 184 du corps de la coulisse 36.

La gorge, longitudinale 184 est avantageusement réalisée venue de matière avec les autres parties du profilé dans lequel est réalisée chaque coulisse 36.

Comme on peut le voir à la figure 14, chaque piste conductrice 180 est reliée localement à au moins un plot conducteur 194 qui est formé sur la face externe 183 de la bande longitudinale de circuit souple 182.

Comme on peut le voir à la figure 13, chaque plot conducteur est agencé au voisinage d'une extrémité longitudinale associée de bande 182 de support.

Il est ainsi possible de raccorder électriquement chaque piste conductrice 180 avec l'extérieur et/ou avec la piste conductrice alignée du tronçon suivant de corps de coulisse.

A cet effet, la paroi supérieure 48 délimitant la rainure 40 du corps de la coulisse 36 comporte un puits 200, débouchant verticalement de part en part, qui donne accès aux plots 194 pour en permettre le raccordement de chaque plot, et donc de chaque piste 180, avec un fil ou câble conducteur 202, dont chacun peut être équipé d'un connecteur ou prise 204.

Comme on peut le voir en considérant la figure 6, chaque piste conductrice comporte des tronçons consécutifs dont chacun est formé sur une bande longitudinale de circuit souple 182 portée par une coulisse 36, les bandes 182 étant logées longitudinalement dans le prolongement l'une de l'autre dans les gorges 184 des coulisses consécutives. Les liaisons électriques entre deux bandes et pistes consécutives sont assurées par des éléments conducteurs soudés sur les plots 194.

Comme on peut le voir à la figure 12, ainsi qu'à la figure 10, les tronçons incurvés convexes des lames déformables élastiquement constituant les frotteurs 190 sont parfaitement aptes à coopérer avec les pistes conductrices en vis-à-vis.

Selon le mode de réalisation illustrée aux figures 14 à 22, le corps de la coulisse 36 présente des faces externes des parois 46 et 48 qui sont profilées aérodynamiquement dans le prolongement de la nervure arrière 44, ne nécessitant plus l'adjonction d'appendices aérodynamiques.

C'est ici la face interne 51 de la paroi verticale 50 qui constitue le fond de la gorge 184 qui est équipé des deux pistes électriques conductrices longitudinales parallèles 180 avec lesquelles peuvent coopérer des moyens de contact électrique.

Les deux pistes 180 sont agencées sur un support longitudinal, qui peut être une bande de circuit souple ou en variante un support rigide isolant, en forme de bande 182 qui comporte des nervures latérales d'orientation longitudinales en saillie 208 entre lesquelles sont logées les pistes 180, et une nervure centrale 188 qui constitue la cloison isolante séparant les deux pistes 180.

Ici encore, les nervures latérales 208 et la cloison centrale isolante 188 peuvent avantageusement être réalisées par dépôt de cordons de matière isolante à base de silicone.

Les chemins de roulement 93 sont ici constitués de deux chemins en arc de cylindre de section sensiblement circulaire, formés dans les faces internes opposées des parois 46 et 48 de la partie avant 38 conformée en rainure 40 de la coulisse 36.

Les deux chemins 93 sont sensiblement centrés sur l'axe central de coulissement A2.

Les deux galets 92 sont décalés longitudinalement et inclinés l'un par rapport à l'autre.

Comme on peut le voir aux figures 14 et 15, chacun des deux galets 92 d'une même paire de galets agencée à l'extrémité libre d'une tige 98, ne coopère qu'en un seul point "P" avec un seul des deux chemins de roulement en améliorant ainsi le centrage des moyens de guidage en coulissement par roulement et en évitant tout phénomène de coincement.

Cet agencement à deux points de contact haut et bas "croisés" est bien entendu reproduit de manière analogue pour les deux galets de l'autre paire de galets d'un chariot 34.

Dans cet autre mode de réalisation des moyens de blocage selon l'invention, les deux patins de blocage 104 ne coopèrent pas avec une surface de blocage, telle que la piste de blocage 51 évoquée précédemment, située à l'intérieur de la rainure 40 de la coulisse 36, mais ils coopèrent avec une surface de blocage en vis-à-vis 47 et 49 du corps de la coulisse située à l'extérieur de la rainure.

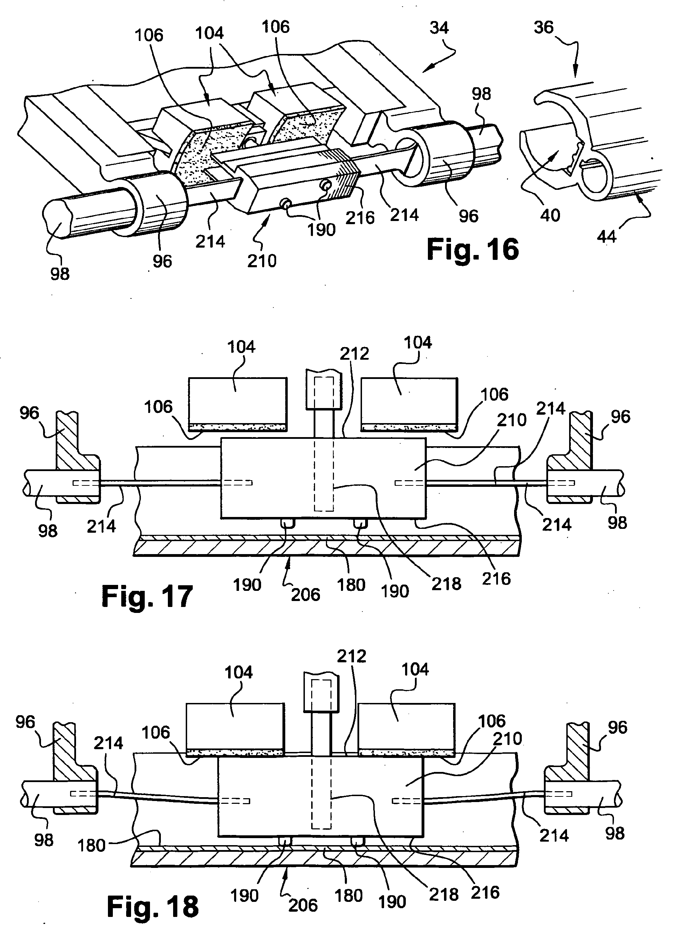

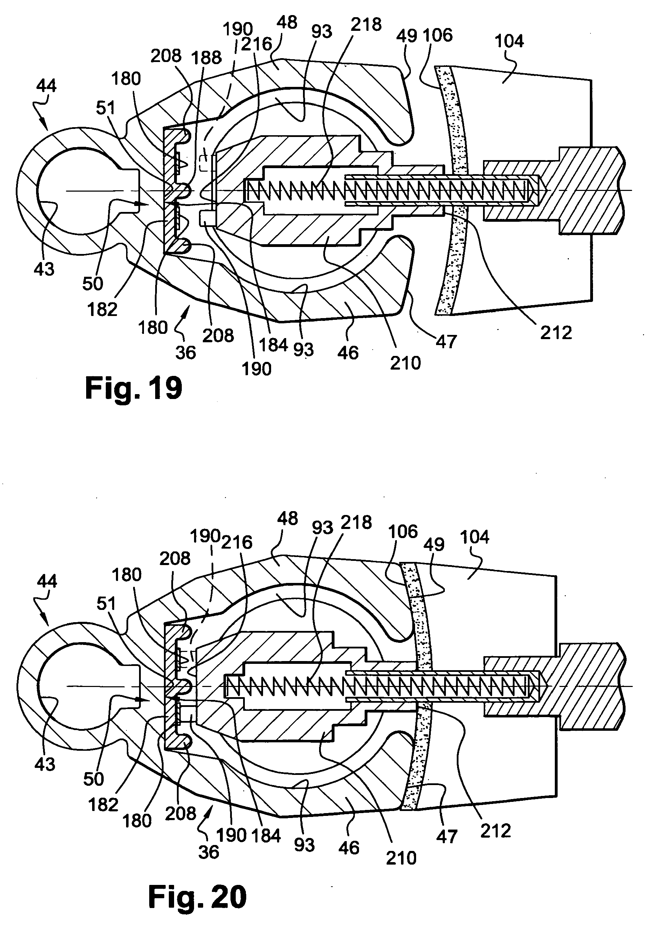

Entre ses branches 96, le corps 94 en "U" du chariot 34 porte un bloc suspendu 210 qui a pour fonction d'être un bloc mobile porte-contacts dont les déplacements transversaux sont provoqués par les patins de blocage 104. Les semelles planes 106 des patins 104 sont susceptibles d'agir sur la face longitudinale arrière 212 du bloc 210 pour provoquer un déplacement correspondant du bloc 210 à partir de sa position de repos ou positon débloquée illustrée aux figures 17 et 19.

Le bloc 210 est suspendu élastiquement entre les branches 96 par deux lames élastiques de support 214 portées par les branches 96.

Dans cette position de repos, la face avant 216 du bloc 210 est espacée avec jeu des nervures 208. Un ressort de compression 218 est agencé entre le palonnier et le bloc 210 pour rattraper les jeux.

Lorsque les patins 104 sont actionnés, comme précédemment, en vue d'assurer le blocage, ils agissent progressivement sur le bloc 210 pour amener ce dernier, transversalement vers l'arrière, dans la position de blocage illustrée aux figures 18 et 20, en déformant élastiquement les lames de support 214.

Le bloc 210 est un bloc porte-contacts électriques. A cet effet, il est en matériau isolant et il porte deux éléments de contact électrique qui sont ici deux plots de contact électrique 190 dont chacun est susceptible de coopérer avec une piste conductrice 180.

Chaque plot de contact 190 fait saillie vers l'avant au-delà de la face avant 216 du bloc et il est d'autre part relié, par des fils non représentés, au corps du chariot 34 et ainsi à la traverse.

Dans la position rétractée des figures 17 et 19, les plots de contact électrique 190 ne sont pas en contact avec les pistes 180 et, lors des déplacements longitudinaux du chariot, il n'y a donc pas de frottements et donc pas d'usure des pistes 180, ni des plots de contact électrique 190.

En position avancée de blocage du bloc 210 illustrée aux figures 18 et 20, chaque plot 190 est en contact électrique avec une piste associée.

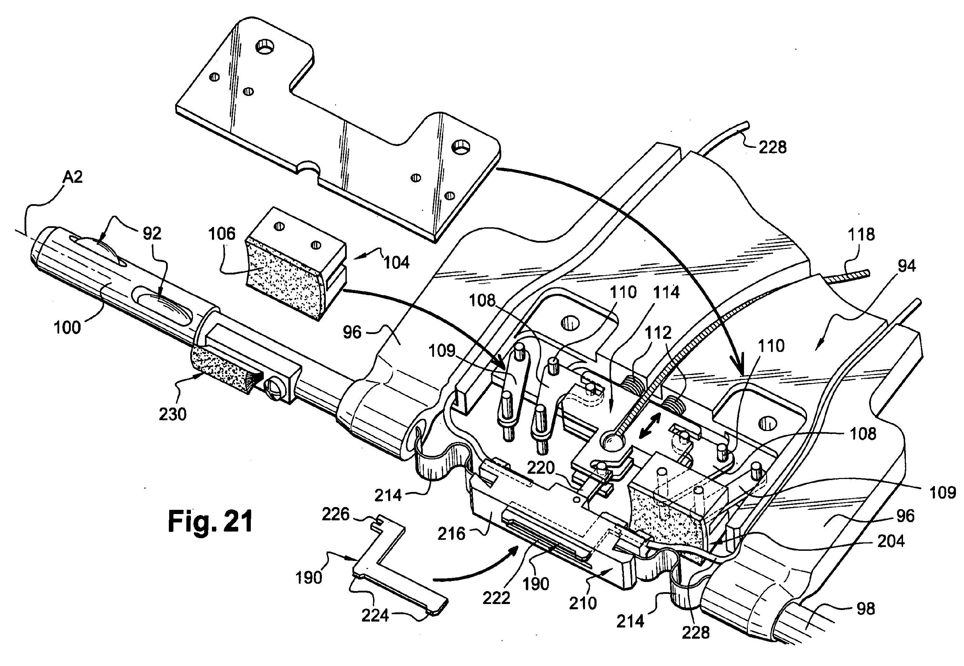

Dans le mode de réalisation préféré illustré partiellement à la figure 21, et par comparaison avec la conception illustrée aux figures 16 à 20, c'est le palonnier 114 qui agit directement sur le bloc 210 porte-contacts, par l'intermédiaire d'une biellette ou barre de commande 220 dont l'extrémité arrière est montée articulée sur le bloc 210 et dont l'extrémité avant est montée articulée sur le palonnier 114.

Le rappel élastique du palonnier 114 est ici assuré par une paire de ressorts à boudin de compression 112 interposés entre le fond du corps en "U" 94 du chariot et la face en vis-à-vis du palonnier 114.

Pour présenter une bonne capacité de rappel élastique et une bonne fiabilité, les lames 214 sont conformées en sinusoïde.

Pour commander les déplacements de chaque patin de blocage 104, chaque levier articulé en L 108 est complété par une bielle complémentaire 109 qui est articulée sur le corps 94 et sur le patin de blocage 104.

Ainsi, chaque patin de blocage 104 est monté articulé sur le corps 94 par un système du type à parallélogramme de manière que la face active de blocage constituée par la semelle 106 reste parallèle à elle-même et parallèle aux pistes de blocage 47 et 49 avec lesquelles la semelle 106 coopère en position de blocage du chariot 34.

Chaque élément de contact électrique 190 est ici une plaquette de contact reçue dans une fente longitudinale 222 du bloc 210 et qui comporte deux bossages de contact 224. Chaque plaquette de contact 190 comporte une patte 226 de raccordement avec un câble électrique 228.

Chaque chariot 34 est ici équipé de deux brosses 230 de nettoyage des pistes 190 conductrices.

## Revendications

1. Ensemble pour le guidage en coulissement longitudinal d'un sous-ensemble (32), notamment d'une traverse supérieure de support d'un élément transversal de division de l'espace intérieur d'une cabine d'avion, du type comportant une coulisse de guidage (36) qui comporte une rainure (40) dont la paroi interne délimite des chemins longitudinaux de guidage (93) et/ou de roulement pour des éléments complémentaires (92) portés par un chariot (34) de guidage et/ou de roulement relié audit sous-ensemble (32), ensemble dans lequel le corps de la coulisse (36) comporte une rainure longitudinale avant (40), ouverte selon une direction transversale, le chariot de guidage (34) est reçu dans la rainure (40) de la coulisse associée (36), le chariot de guidage (34) comporte au moins un système (102) de blocage en position longitudinale du chariot (34) qui coopère avec la coulisse (36), et le chariot de guidage (34) comporte des éléments de roulement (92), agencés par paires à ses extrémités longitudinales (100) opposées, qui sont susceptibles de rouler sur des chemins longitudinaux de roulement (93) formés dans la rainure (40) du corps de la coulisse (36),
**caractérisé:**
- **en ce que** les chemins de roulement sont des arcs de cylindre longitudinaux (93), et les éléments de roulement comportent chacun une paire de galets de roulement croisés (92) ;
- et **en ce que** le système de blocage (102) comporte au moins un patin de blocage (104) qui est agencé longitudinalement entre les éléments de roulement (92) agencés par paires aux extrémités longitudinales (100) opposées du chariot (34), et qui sous l'action d'un mécanisme d'actionnement (108, 114), est monté mobile entre une position effacée et une position de blocage dans laquelle le patin coopère par friction avec une surface de blocage appartenant au corps de la coulisse (36).

2. Ensemble selon la revendication 1, **caractérisé en ce que** le patin de blocage (104) comporte une semelle (106) de blocage qui est susceptible de coopérer avec une piste plane longitudinale de blocage (51) formée dans la rainure (40).

3. Ensemble selon la revendication 1, **caractérisé en ce que** le patin de blocage (104) comporte une semelle (106) de blocage qui est susceptible de coopérer avec une piste longitudinale de blocage (47, 49) formée à l'extérieur de la rainure (40).

## Claims

1. An assembly for guiding the longitudinal sliding movement of a sub-assembly (32), especially that of a top crossmember for supporting a transverse element for dividing up the interior space of an aircraft cabin, of the type that comprises a guide rail (36) comprising a groove (40) whose inside wall defines longitudinal guideways (93) and/or raceways for complementary elements (92) carried by a guide runner and/or rolling-contact runner (34) connected to said sub-assembly (32), assembly in which the body of the rail (36) comprises a longitudinal front groove (40) which is open in a transverse direction, the guide runner (34) fits into the groove (40) of the associated rail (36), the guide runner (34) has at least one system (102) for locking the runner (34) engaged in the rail (36) in any longitudinal position, and the guide runner (34) comprises rolling elements (92) arranged by pairs at its opposite longitudinal ends (100) and capable of rolling along longitudinal raceways (93) formed in the groove (40) of the body of the rail (36)
**characterized :**
- **in that** that the guideways are longitudinal cylindrical arcs (93), and the rolling elements each comprise a pair of mutually oblique rollers (92)
- and **in that** the locking system (102) comprises at least one locking shoe (104) which is arranged longitudinally between the rolling elements (92) arranged by pairs at the opposite longitudinal ends (100) of the runner (34), and which, under the action of an operating mechanism (108, 114), is movable between a retracted position and a locked position in which the shoe engages by friction with a locking surface belonging to the body of the rail (36).

2. The arrangement as claimed in claim 1, **characterized in that** the locking shoe (104) comprises a locking sole (106) capable of engaging with a longitudinal planar locking track (51) formed in the groove (40).

3. The arrangement as claimed in claim 1, **characterized in that** the locking shoe (104) comprises a locking sole (106) capable of engaging with a longitudinal locking track (47, 49) formed outside of the groove (40).

## Patentansprüche

1. Anordnung für die longitudinale gleitende Führung einer Unteranordnung (32), insbesondere einer oberen Querstrebe für die Unterstützung eines transversalen Elements zur Unterteilung des Innenraums einer Flugzeugkabine, des Typs, der eine Gleitführung (36) umfasst, die eine Rinne (40) aufweist, deren Innenwand longitudinale Führungs- und/oder Rollwege (93) für komplementäre Elemente (92) begrenzt, die von einem Führungs- und/oder Rollschlitten (34) getragen werden, der mit der Unteranordnung (32) verbunden ist" wobei in der Anordnung der Gleitkörper (36) eine vordere longitudinale Rinne (40) aufweist, die in Querrichtung offen ist, wobei der Führungsschlitten (34) in der Rinne (40) des zugeordneten Gleiters (36) aufgenommen ist, wobei der Führungsschlitten (34) wenigstens ein System (102) zum Blockieren des Schlittens (34) an seiner longitudinalen Position aufweist, das mit dem Gleiter (36) zusammenwirkt, und wobei der Führungsschlitten (34) Rollelemente (92) aufweist, die paarweise an seinen gegenüberliegenden longitudinalen Enden (100) angeordnet sind, die auf den longitudinalen Rollwegen (93) rollen können, die in der Rinne (40) des Körpers des Gleiters (36) ausgebildet sind,
**dadurch gekennzeichnet:**
- **dass** die Rollwege longitudinale Zylinderbögen (93) sind und die Rollelemente jeweils ein Paar gekreuzte Rollen (92) aufweisen;
- und **dass** das Blockiersystem (102) wenigstens einen Blockierschuh (104) aufweist, der longitudinal zwischen den Rollelementen (92), die an den gegenüberliegenden longitudinalen Enden (100) des Schlittens (34) paarweise angeordnet sind, angeordnet ist und der unter der Wirkung eines Betätigungsmechanismus (108, 114) zwischen einer zurückgezogenen Position und einer Blockierposition, in der der Schuh durch Reibung mit einer zum Körper des Gleiters (36) gehörenden Blockieroberfläche zusammenwirkt, beweglich montiert ist.

2. Anordnung nach Anspruch 1, **dadurch gekennzeichnet, dass** der Blockierschuh (104) eine Blockiersohle (106) aufweist, die mit einer longitudinalen ebenen Blockierbahn (51), die in der Rinne (40) ausbildet ist, zusammenwirken kann.

3. Anordnung nach Anspruch 1, **dadurch gekennzeichnet, dass** der Blockierschuh (104) eine Blockiersohle (106) aufweist, die mit einer longitudinalen Blockierbahn (47, 49), die außerhalb der Rinne (40) ausgebildet ist, zusammenwirken kann.
